# EUROPEAN PATENT APPLICATION

(11) **EP 1 479 536 A1**
(43) Date of publication of application: **24.11.2004**
(21) Application number: 04425333.4
(22) Date of filing: 10.05.2004
(51) Int. Cl.: B60C 11/16

(54) **Device with retractable spikes for increasing the grip of tyres**

(30) Priority: 21.05.2003 IT FI20030140
(71) Applicant: Meacci, Piero, 50050 Empoli (FI) (IT)
(72) Inventor: Meacci, Piero, 50050 Empoli (FI) (IT)
(74) Representative: Martini, Lazzaro

(57) **Abstract**

An apparatus for increasing the grip of tyres on icy or snow-covered road surfaces, characterized in that it comprises a plurality of spikes (1) disposed for longitudinally sliding within corresponding seats (2) and associated with pneumatic means to drive the same spikes partially out thereof and, respectively, back therein: the said seats (2) being located inside the tyre (3), that is, within the space between the rim (4) and the casing (5) thereof, and radially oriented so that, when extracted, the spikes (1) protrude partially from the tread (50) of the casing (5) and, when retracted, they result inside the respective seats (2).

## Description

The present invention refers to a device for increasing the grip of tyres on icy or snow-covered road surfaces.

The device is for use in cars, lorries and lorries with trailer, building-yard vehicles, buses, etc.

The present invention has the object, in particular, to free the drivers from having on board grip tires, chains or other similar means which require skill and time to be mounted whenever driving along icy or snow-covered road's lengths.

This result has been achieved, according to the invention, by providing a device having the characteristics disclosed in the claim 1.
Further characteristics being set forth in the dependent claims.

The present invention makes it possible for a driver not to use chains or grip tyres when driving along lengths of icy or snow-covered roads, by simply varying the configuration of the tyres according to actual requirements, without using any device, and with extreme rapidity.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a schematic side view of a tyre provided with a device according to the present invention;
- Fig. 2 is a schematic view in diametral section of the tyre of Fig. 1;
- Fig. 3 is a partial perspective view of the tyre in the configuration of retracted spikes;
- Fig. 4 is a schematic view in longitudinal section of the tyre in the configuration of Fig. 3; and
- Fig. 5 is a sectional view similar to that of Fig. 4 but with the tyre in the configuration of extracted spikes.

Reduced to its basic structure, and reference being made to the figures of the attached drawings, a device according to the present invention comprises a plurality of spikes (1) disposed for longitudinally sliding within corresponding seats (2) and associated with pneumatic means to drive the same spikes partially out thereof and, respectively, back therein: the said seats (2) being located inside the tyre (3), that is, within the space between the rim (4) and the casing (5) thereof, and radially oriented so that, when extracted, the spikes (1) protrude partially from the tread (50) of the casing (5) and, when retracted, they result inside the respective seats (2).

Advantageously, each spike (1) is acted upon by a spring (6) intended to keep it retracted inside the respective seat (2) when there is no action by the said pneumatic means.
The said pneumatic means comprise, according to the example shown in the figures of the attached drawings, an annular reservoir (7) disposed within the tyre, that is, in the space between the rim and said seats (2), which reservoir is supplied with compressed air through a supply valve (70) accessible from the outer side of the rim (4), and is connected with the seats (2) via a conduit (71) having an interception and relief valve (72) mounted thereon; the seats (2) being in communication with each other so that only one of them requires to be connected to the reservoir (7). The valve (72) may be operated manually or by remote control.

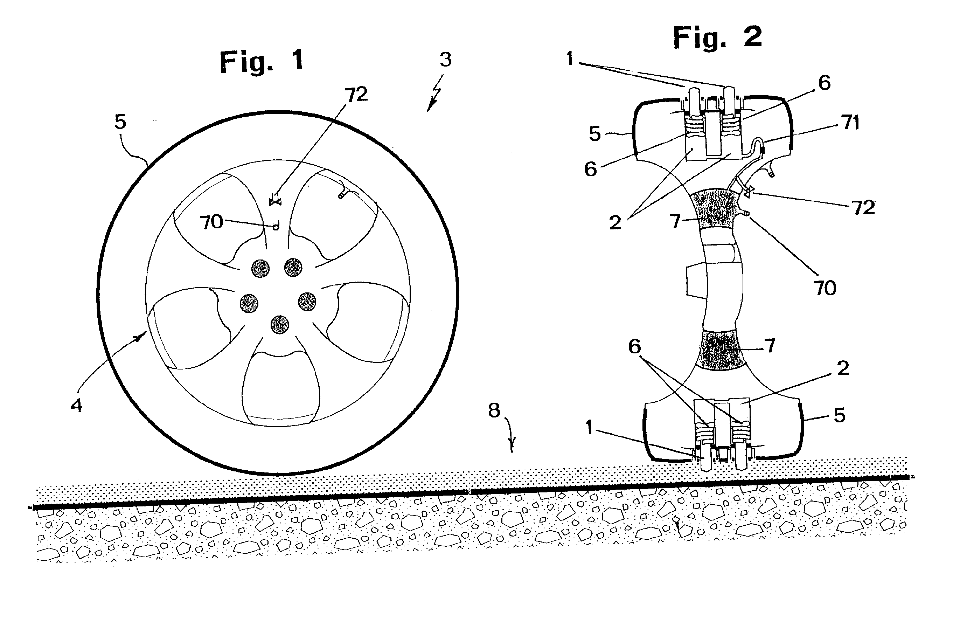

Advantageously, the number of spikes (1) may be doubled by correspondingly doubling the seats (2), the latter being possibly disposed two-by-two as shown in Fig. 2.

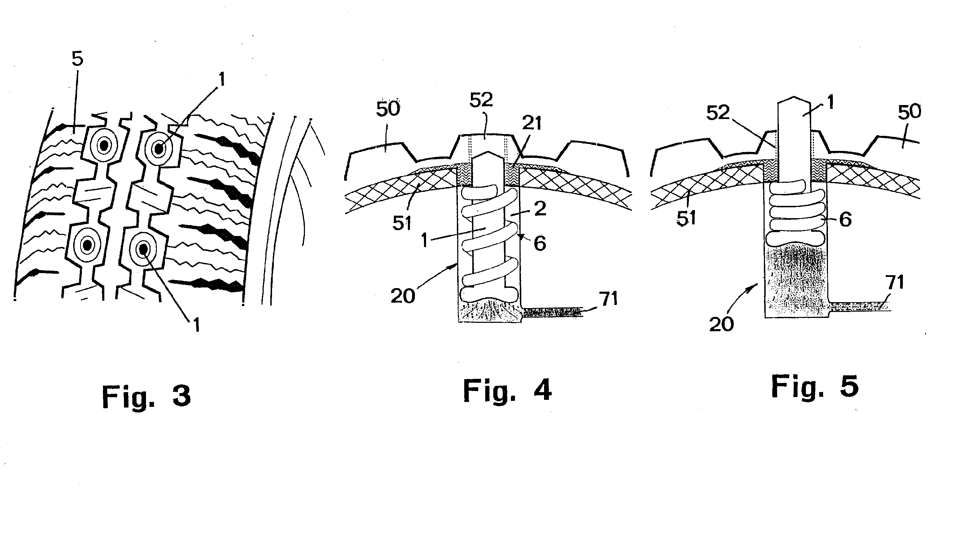

According to the example illustrated in Figs. 4 and 5 of the attached drawings, each of said seat (2) is delimited laterally and at the bottom by a cylindrical body (20) and on top by a block (21), provided with a central opening for the corresponding spike (1), which acts as a connection and sealing element between the said body (20) and the armature (51) of the tyre.

In correspondence of each spike (1), the tread (50) is provided with a radial opening (52).

To operate the extraction of the spikes (1), and thus obtaining a high degree of grip of the tyre with the icy or snow-covered road surface (8), the driver opens the valve (72).
This action causes the pressurization of the seats (2) and, accordingly, the partial protrusion of the spikes (1) with compression of the spring (6).
To allow the retraction of the spikes (1), that is, the re-establishment of the normal configuration, the driver activates the bleeding of the air from the seats (2) which thus become depressurized. As a result, the springs (6) are made to extend and, by acting on the heads of spikes (1) - as can be seen in Figs. 4 and 5 - cause the latter to retract.

The present device can be advantageously used, besides on cars, also on industrial vehicles which have compressors on board and are provided with tyre-casings exhibiting an inner space of large dimensions.

## Claims

1. Device for increasing the grip of tyres on icy or snow-covered road surfaces **characterized in that** it comprises a plurality of spikes (1) disposed for longitudinally sliding within corresponding seats (2) and associated with pneumatic means to drive the same spikes partially out thereof and, respectively, back therein: the said seats (2) being located inside the tyre (3), that is, within the space between the rim (4) and the casing (5) thereof, and radially oriented so that, when extracted, the spikes (1) protrude partially from the tread (50) of the casing (5) and, when retracted, they result inside the respective seats (2).

2. Device according to claim 1, **characterized in that** each spike (1) is acted upon by a spring (6) intended to keep it retracted inside the respective seat (2) when there is no action by the said pneumatic means.

3. Device according to claim 1, **characterized in that** the said pneumatic means comprise an annular reservoir (7) disposed within the tyre, that is, in the space between the rim and said seats (2), which reservoir is supplied with compressed air through a supply valve (70) accessible from the outer side of the rim (4) and is connected with the seats (2) via a conduit (71) having an interception and relief valve (72) mounted thereon, and **in that** the seats (2) are in communication with each other.

4. Device according to claims 1 and 3, **characterized in that** the said valve (72) can be operated either manually or by remote control.

5. Device according to one or more preceding claims, **characterized in that** each of said seat (2) is delimited laterally and at the bottom by a cylindrical body (20) and on top by a block (21), provided with a central opening for the corresponding spike (1), which acts as a connection and sealing element between the said body (20) and the armature (51) of the tyre.

6. Device according to one or more preceding claims, **characterized in that**, in correspondence of each spike (1), the tread (50) has a radial opening (52).
